# EUROPEAN PATENT APPLICATION

(11) **EP 1 755 130 A1**
(43) Date of publication of application: **21.02.2007**
(21) Application number: 05018075.1
(22) Date of filing: 19.08.2005
(51) Int. Cl.: G21C 19/42, G21C 19/44

(54) **Method of treating nuclear fuel or nuclear waste**

(71) Applicant: Rolfs, Sigrid, 48143 Münster (DE); Kettner, Karl-Ulrich, 32130 Enger (DE); Kettner, Monika, 32130 Enger (DE)
(72) Inventor: Rolfs, Sigrid, 48143 Münster (DE); Kettner, Monika, 32130 Enger (DE); Rolfs, Claus, 48143 Münster (DE); Kettner, Karl-Ulrich, 32130 Enger (DE)
(74) Representative: Wiebusch, Manfred

(57) **Abstract**

Method of treating nuclear fuel or nuclear waste, wherein a substance containing nuclei which are to be involved in a nuclear process (S4) is embedded in a matrix of atoms, said matrix being selected for providing an electron spatial probability near the nuclei which has an influence on said nuclear process of said nuclei.

## Description

The invention relates to a method of treating nuclear fuel or nuclear waste.

Recent investigations, for example F. Raiola et al., Eur. Phys. J. A 13 (2002), p. 377; F. Raiola et al., Eur. Phys. J. A 19 (2004), p. 283; D. Zahnow et al., Z. Phys. A 359 (1997), p. 211, have shown that a rate of fusion reactions in metals is drastically enhanced compared to fusion reactions in gases or insulators. The data of the fusion reactions are quantitatively explained using the plasma model of Debye to describe the quasi-free metal electrons.

Further investigations of the screening effect on the reactions of various nuclides across the periodic system, using metallic environments, show that fusion or decay rates depend on the density of quasi-free electrons near the involved nucleus.

It has been found that the influence of the electron probability density on nuclear processes may be purposefully used to control a nuclear process on a commercial or industrial scale.

The subject matter of the invention is a method of treating nuclear fuel or nuclear waste, wherein a substance containing nuclei which are to be involved in a nuclear process is embedded in a matrix of atoms, said matrix being selected for providing an electron spatial probability near the nuclei which has an influence on said nuclear process of said nuclei.

The matrix is, for example, provided being in one of the solid, the liquid, and the gaseous state. However, the substance may be introduced into the matrix at an introduction state of the matrix which may differ from the state that is acquired afterwards. For example, the matrix may be formed by a solid metal, the substance having been introduced into the metal at a melted state of the metal.

Useful details of the invention are indicated in the dependent claims.

Preferably, a process rate of the nuclear process is changed by the influence of the electron spatial probability. That is, the process rate may be increased (e.g. α-decay) or may be decreased (e.g. β⁻-decay) due to the influence of the spatial probability of the matrix electrons.

For example, the substance containing said nuclei is introduced into said matrix to a selected mass ratio. For example, the substance may be introduced into the matrix to a mass ratio of less than 10%. However, the mass ratio may be optimized in view of the kind of substance, nuclear process and the matrix used.

Experiments show that the influence of the electron spatial probability on the nuclear process may depend on the temperature. Accordingly, the nuclear process preferably is controlled by maintaining the matrix in a selected temperature range. For example, the matrix with the embedded substance may be cooled to a cooling temperature. The cooling temperature may be below 100 K, and may be, for example, approximately the temperature of liquid helium, i.e. 4 K.

The nuclear process is, for example, one of the group consisting of nuclear fusion, nuclear decay, spallation, and particle capture.

In one embodiment, the matrix provides quasi-free electrons having a non-vanishing spatial probability near said nuclei.

For example, the matrix is formed by one of the group of a metal, alloy, compound containing a metal, and mixture containing a metal. The electron density can be controlled by selecting suitable metals, alloys, components, mixtures or compounds. At present, metals like Palladium (Pd) or Indium (In) seem to show the largest free-electron plasma effect. A suitable material has to be selected depending also on its melting properties, its worldwide availability, and its price. The material may contain more than one metal. The mixture or the compound may also contain other elements than metals.

In one embodiment, the substance is radioactive waste. In nuclear fission reactors, radioactive waste including fission products and transuranic isotopes is produced. These are described by L. C. Hebel et al., Rev. Mod. Phys. 50 (1978), p. 1, as the most important components of radioactive waste. One of the most dangerous components of nuclear waste is the radium isotope Ra-226. The radioactive isotope Ra-226 is an alpha emitter and has a half-life of approximately T_{1/2} = 1600 years. It has a high solubility and is readily incorporated in biological organisms. Because of the high radioactivity and/or the comparatively long half-life of Ra-226 or other components of radioactive waste, parts of the radioactive waste may have to be safely stored for thousands of years.

The method of the invention facilitates the elimination of radioactive waste, especially high level radioactive waste and transuranic radioactive waste. This is achieved by the following steps: radioactive waste is embedded in a matrix providing quasi-free electrons having a non-vanishing spatial probability near the radioactive nuclei of the radioactive waste, is cooled to a cooling temperature, and is kept at the cooling temperature or below to let the radioactivity of the radioactive waste decay. Depending on the chosen cooling temperature and on the matrix, the decay time and thus the half-life of radioactive elements contained in the radioactive waste is drastically reduced due to an accelerating effect of the quasi-free metal electrons on the nuclear decay.

This embodiment of the method is especially useful for the removal of high level radioactive waste or transuranic radioactive waste. However, the method may also be applied to intermediate level radioactive waste or to low level radioactive waste.

This embodiment of the method is also especially useful when the radioactive waste comprises an isotope having a medium-long radioactive half-life of, for example, more than 25 years and less than 35000 years. For example, the radioactive waste comprises Ra-226 having a half-life of approximately 1600 years. Preferably, the matrix with the embedded radioactive waste is then kept at a cooling temperature of, for example, T=4 K for at least one year. However, the cooling may be interrupted and later continued. Thus, the time during which the matrix with the embedded radioactive waste is kept at the cooling temperature preferably accumulates to at least one year.

For example, the used-up rods of a reactor containing the remaining fissible nuclides together with the transuranic waste may be added directly to the metallic melt so as to be melted therein. When the transuranic waste has been removed (after, say, one year), the rod material still contains fissible nuclides and the fission-product waste, notably the nuclides ¹²⁹I (T_{1/2} = 15 x 10⁶ y). Since the rods have now a relatively low radioactivity, one can separate the less problematic nuclides ¹²⁹I from the fissible nuclides using methods of chemistry or mass separation or the like. The separated ¹²⁹I nuclides can then be exposed to a thermal neutron flux, whereby ¹²⁹I is transformed by neutron capture in a short time (days) into ¹³⁰I, which in turn decays within minutes to the stable isotope ¹³⁰Xe. Thus all long-living waste is removed.

Preferred embodiments of the invention will now be described in conjunction with the drawings, in which:
- Fig. 1: schematically shows a method of controlling a nuclear process; and
- Fig. 2: schematically shows a method of eliminating radioactive waste by controlling nuclear decay.

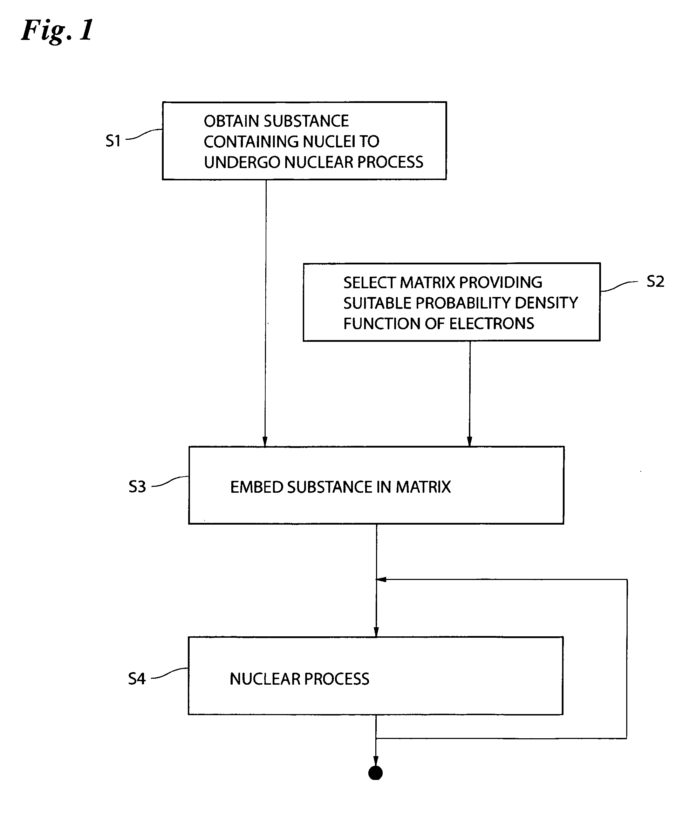

In Fig. 1, in a first step S1 of the method of controlling a nuclear process, a substance is provided which contains nuclei that are to undergo said nuclear process.

In a second step S2, a matrix of atoms is selected which provides, when the substance is embedded in the matrix in a step S3, an electron spatial probability near the nuclei which has an influence on said nuclear process.

The steps S1 and S2 may be performed in any order.

In a step S4, the nuclei undergo said nuclear process, the process being influenced by the electron spatial probability of the matrix. This situation may be maintained as desired, and the nuclear process may take place at a number of nuclei, its rate being determined by the electron spatial probability of the selected matrix. For example, the process rate may be increased, or, alternatively, decreased.

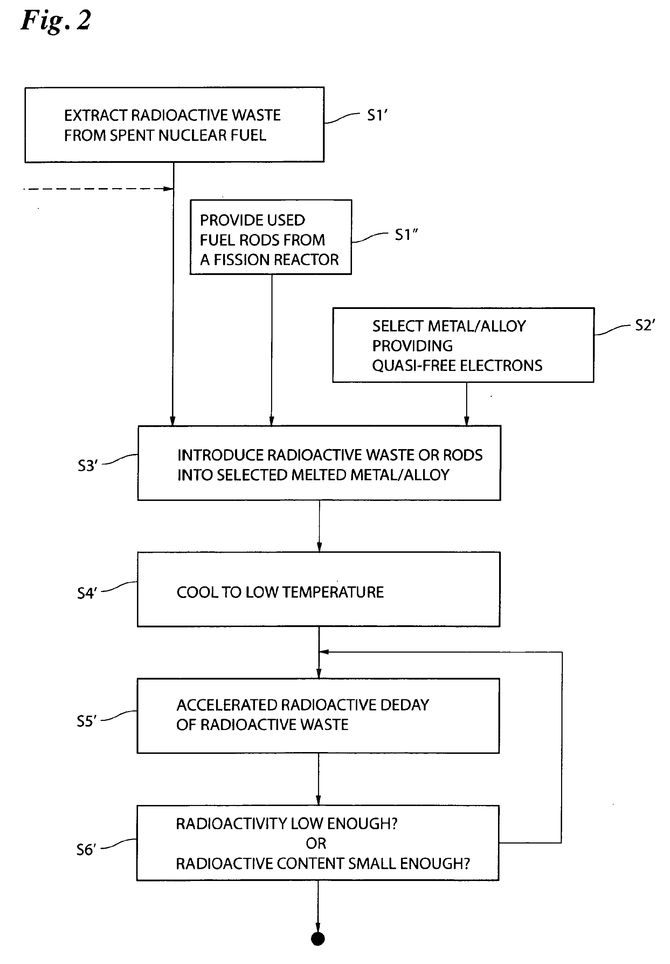

Fig. 2 shows a more specific embodiment of the method of Fig. 1.

In the first step S1', radioactive waste, for example, high level radioactive waste is obtained by extracting it from spent nuclear fuel. The extraction may be done, for example, using methods which are known from the reprocessing of nuclear fuel for separating the components of spent nuclear fuel. Optionally, used-up fuel rods of a fission reactor are provided in a step S1'' and are directly subjected to the subsequent process steps.

The high level radioactive waste thus obtained comprises, for example, radium-226 having a half-time of approximately T_{1/2} = 1600 years. Radium-226 undergoes an alpha decay emitting alpha particles of an energy of 4.78 MeV.

In the step S2', a matrix is selected having quasi-free electrons providing, when the radioactive waste or the rods are embedded in the matrix in the step S3', a non-vanishing electron spatial probability near the radioactive nuclei of the waste. This has an accelerating influence on their nuclear decay rate.

In step S3', the radioactive waste and/or the rods are introduced into a melted metal or alloy to a mass ratio of less than about 10%. For example, the high level radioactive waste containing radium-226 is introduced into palladium (Pd) with a mass ratio of several percent.

In step S4', the obtained product is cooled to a cooling temperature T which is, for example, approximately the temperature of liquid helium, e.g. T = 4 K.

The obtained product is than kept at the cooling temperature of, for example, T = 4K in step S5'. Surrounded by the cooled palladium, the radioactive isotopes experience a drastic shortening of their half-life. For example, the half-life of radium-226 may be reduced by a factor of 4500. Thus, under the described conditions, the half-life of radium-226 is only 0.36 years (4.3 months). Thereby, the radioactivity has completely decayed in a few years.

A similar reduction of the half-life is found for all transuranic elements in the radioactive waste produced by nuclear fission reactors.

When in a step S6', for example, after several years, the radioactive content of the product is small enough, the method is brought to an end. In the step S6', for example, the α-decaying waste has disappeared almost completely and thus, the product is practically free of transuranic isotopes. The method may also be finished when the radioactivity is low enough to allow a different handling or storage of the radioactive waste.

Thus, the radioactive waste is eliminated in an efficient manner in a time which is drastically shorter than the decay time of the radioactive waste when left unattended.

Instead of the metal palladium, also indium (In) or tin (Sn) or other materials showing the described effect may be used. Moreover, a melted mixture containing a metal or a melted compound containing a metal may be used instead of the metal or alloy.

Instead of extracting the radioactive waste from spent nuclear fuel in step S1', the radioactive waste may alternatively be obtained in a different way and may be introduced into the melted metal or alloy or mixture or compound, as is indicated by a dashed arrow in Fig. 2.

The embodiments shown in Figs. 1 and 2 are given as notable examples of the method of the invention. However, the method may also be applied to nuclear reactions other than accelerated radioactive decay.

## Claims

1. A method of treating nuclear fuel or nuclear waste, **characterized in that** a substance containing nuclei which are to be involved in a nuclear process (S4; S5') is embedded in a matrix of atoms, said matrix being selected for providing an electron spatial probability near the nuclei which has an influence on said nuclear process of said nuclei.

2. The method of claim 1. wherein a process rate of the nuclear process (S4) is changed by the influence of the electron spatial probability.

3. The method of any one of the preceding claims, wherein the influence of the electron spatial probability on the nuclear process (S4) depends on the temperature, and wherein the nuclear process is controlled by maintaining a selected temperature range.

4. The method of any one of the preceding claims, wherein the nuclear process (S4; S5') is one of the group consisting of nuclear fusion, nuclear decay, spallation, and particle capture.

5. The method of any one of the preceding claims, wherein the matrix provides quasi-free electrons having a non-vanishing spatial probability near said nuclei.

6. The method of any one of the preceding claims, wherein the matrix is formed by one of the group of a metal, alloy, compound containing a metal, and mixture containing a metal.

7. The method of any one of the preceding claims, wherein the substance is radioactive waste.

8. The method of claim 7, wherein the radioactive waste is embedded in a matrix providing quasi-free electrons having a positive non-vanishing probability near said nuclei, is cooled to a cooling temperature, and is kept at the cooling temperature or below to let the radioactivity of the radioactive waste decay.

9. Method according to any one of claims 7 and 8, wherein the radioactive waste is obtained by extracting it from spent nuclear fuel.
